# EUROPÄISCHE PATENTSCHRIFT

(11) **EP 2 459 295 B1**
(45) Veröffentlichungstag und Bekanntmachung des Hinweises auf die Patenterteilung: **28.11.2018**
(21) Anmeldenummer: 10740597.9
(22) Anmeldetag: 30.07.2010
(51) Int. Cl.: B01D 27/08, B01D 35/30

(54) **FILTER**
FILTER
FILTRE

(30) Priorität: 30.07.2009 DE 102009035683
(43) Veröffentlichungstag der Anmeldung: 06.06.2012
(73) Patentinhaber: Mann + Hummel GmbH, 71636 Ludwigsburg (DE)
(72) Erfinder: THIENEL, Michael, 95349 Thurnau (DE)
(86) Internationale Anmeldenummer: PCT/EP2010/061101
(87) Internationale Veröffentlichungsnummer: WO 2011/012695

(56) Entgegenhaltungen:
- EP-A1- 1 216 738
- WO-A1-99/04879
- US-A- 5 180 490
- US-A1- 2002 162 781
- US-A1- 2007 261 377
- US-A1- 2009 145 826

## Beschreibung

### Technisches Gebiet

Die Erfindung betrifft einen Filter, insbesondere Wechselfilter, insbesondere für Kraftfahrzeuge, industriemotoren, insbesondere Ölfilter, Kraftstofffilter oder Kühlmittelfilter, mit einem Filtergehäuse, in dem ein Filterelement untergebracht ist und das ein stirnseitiges Anschlussende mit einem Deckel aufweist, das mit einem mit dem Anschlussende korrespondierenden Anschlusskörper durch eine Steck- und/oder Drehbewegung dicht verbindbar ist, wobei der Deckel eine Öffnung für eine Fluidverbindungen zwischen dem Anschlusskörper und dem Filtergehäuse aufweist,

Ferner betrifft die Erfindung eine Brennkraftmaschine mit einem Anschlusskopf für einen Filter.

### Stand der Technik

Marktbekannte Wechselfilter bei Kraftfahrzeugen sind in axialer Richtung gegenüber einem Filterkopf abgedichtet. Druckerhöhungen im Wechselfilter können zur Verformung des Deckels und damit zur Vergrößerung des abzudichtenden Dichtungsbereichs führen. Auf diese Weise sinkt die Flächenpressung an der Dichtung, was Undichtheiten zur Folge haben kann. US 2007/261377 A1 offenbart eine Fluidfilteranordnung, insbesondere für die Filtration von Flüssigkeit, beispielsweise Öl, wie zum Beispiel in einem Schmiersystem für einen Überlandlastwagen. Die Fluidfilteranordnung umfasst eine Filterpatrone oder ein Filterelement, das funktionell auf einem Filterblock oder Filterkopf ausgerichtet ist, typischerweise durch Verschrauben, wobei die Filterpatrone ein Filtermedium aufweist, das in einer Dose oder einem Gehäuse betriebsbereit ausgerichtet ist und wobei ein Gewindering vorgesehen ist, durch welchen sowohl die Filterpatrone an dem Filterkopf zu befestigen, als auch der Fluidfluss von dem Filterkopf zu dem Filtermedium zuzulassen ist, wenn die Filteranordnung von außen nach innen strömt. Ein erster Bereich des Gewinderings ist an dem Gehäuse befestigt, und das Gehäuse weist einen erweiterten Durchmesserbereich auf, der mit einer U-förmigen Biegung endet, die als ein Abschnitt ausgebildet ist, der über eine Endspitze des ersten Bereichs gebogen ist. WO 99/04879 offenbart eine Fluidfilteranordnung mit einem Gewinde versehen, welche an dem Filterkopf angebracht ist. Die Filteranordnung umfasst ein Hauptstrom-Primärfilterelement, ein zusammenwirkendes Nebenstrom-Filterelement, eine Auslassströmungsdüse, eine Außenschale, eine Stützfeder, eine innere Dichtung, eine einheitliche Mutternplatte und eine äußere Dichtung. US 2002/162781 A1 offenbart einen Wechselfilter mit einem Filtergehäuse, in welchem ein Filterelement untergebracht ist. Ein Gehäusedeckel mit einem U-förmigen Profil weist eine mit Innengewinde versehene Öffnung zur Befestigung des Filters an einem Filterkopf oder einer Befestigungsbasis auf, die Fluid-Eingangs- und Fluid-Ausgangskanäle bereitstellt. US 2002/162781 A1 offenbart weiterhin eine Dichtung als einheitliche elastomere Komponente mit einer ringförmigen Ringform. Die Abschnitte und Oberflächen der Dichtung sind so gestaltet, dass sie mit dem Halter zusammenwirken.

Der Erfindung liegt die Aufgabe zugrunde, einen einfachen und zuverlässigen Filter und eine Brennkraftmaschine der eingangs genannten Art zu gestalten, bei dem/der die Filtrierung verbessert und die Dichtheit der Verbindung des Filtergehäuses mit dem Anschlusskörper optimiert wird.

### Offenbarung der Erfindung

Diese Aufgabe wird erfindungsgemäß durch ein Flüssigkeitsfiltersystem mit einem Anschlusskörper und einem Filter, insbesondere Wechselfilter, insbesondere für Kraftfahrzeuge, Industriemotoren, insbesondere Ölfilter, Kraftstofffilter oder Kühlmittelfilter, gemäß Anspruch 1 gelöst, wobei der Filter mit einem Filtergehäuse versehen ist, in dem ein Filterelement untergebracht ist und wobei der Filter ein stirnseitiges Anschlussende mit einem Deckel aufweist, das derart ausgebildet ist, dass es mit dem mit dem Anschlussende korrespondierenden Anschlusskörper durch eine Steck- und/oder Drehbewegung dicht verbindbar ist, wobei der Deckel eine Öffnung für eine Fluidverbindung zwischen dem Anschlusskörper und dem Filtergehäuse aufweist, wobei am Anschlussende des Filtergehäuses ein Dichtungsbereich und ein Haltebereich angeordnet sind, die derart ausgebildet sind, dass sie konzentrisch im Wesentlichen axial zur Steckrichtung verlaufen und radial nach innen gewandt sind, und die mit einem jeweiligen radial nach außen gewandten im Wesentlichen axial verlaufenden Dichtungsbereich und einem Haltebereich des Anschlusskörpers zusammenwirken können, wobei der Deckel ein S-förmiges Profil aufweist, wobei die Schenkel des Profils den Dichtungsbereich und Haltebereich am Anschlussende des Filtergehäuses wenigstens mit bilden, und wobei der als Anschlussflansch ausgebildete Anschlusskörper auf seiner dem Filtergehäuse zugewandten Seite einen radial inneren Haltezylinder und einen radial äußeren Dichtungszylinder aufweist, welche sich axial zu einer Steckrichtung des Filtergehäuses erstrecken.

Erfindungsgemäß ist also die Haltefunktion getrennt von der Dichtfunktion. Ein Einfluss von etwaigen auftretenden Kräften, insbesondere durch pulsierende Druckänderungen im Filtergehäuse, auf die Dichtfunktion wird auf diese Weise reduziert. Ferner ist bei diesem Aufbau eine radialer Richtung wirkende Dichtung möglich. Diese hat gegenüber aus dem Stand der Technik bekannten Axialdichtungen den Vorteil, dass sie bei Erhöhungen des Drucks im Filtergehäuse nicht in ihrer Dichtfunktion nachlässt. Bei bekannten Axialdichtungen kann durch einen Druck im Filtergehäuse der Dichtspalt zwischen zwei abzudichten Flächen vergrößert werden, was zu einer Beeinträchtigung der Dichtheit führen kann. Ferner gleichen Radialdichtflächen Toleranzen hinsichtlich Axialverschiebung der Dichtflächen zueinander aus.

Bei einer vorteilhaften Ausführungsform kann der Haltebereich am Anschlussende radial innen sein und Verbindungselemente einer lösbaren Schnellverbindung, insbesondere einer Steck-Dreh-Verbindung, vorzugsweise einer Schraubverbindung oder einer Bajonettverbindung oder einer Rastverbindung, aufweisen, die mit entsprechenden Verbindungselementen des radial inneren Haltebereichs des Anschlusskörpers zusammenwirken können und der radial äußere Dichtungsbereich am Anschlussende kann Dichtungselemente, insbesondere mit einer Dichtungsfläche, mit bilden, die mit entsprechenden Dichtungselementen, insbesondere mit einer Dichtungsfläche oder einer Radialdichtung, des radial äußeren Dichtungsbereichs des Anschlusskörpers in radialer Richtung dichtend zusammenwirken können. Der Vorteil einer lösbaren Schnellverbindung ist, dass das Filtergehäuse und der Anschlusskörper insbesondere bei Wartungs- oder Instandsetzungsarbeiten einfach getrennt werden können. Steck-Dreh-Verbindungen wie insbesondere Bajonettverbindungen haben darüber hinaus den Vorteil, dass sie eine große Trag- und Haltekraft aufweisen, die auch mit geringen Montagekräften erzielt wird, und eine schnelle Montage- und Demontage ermöglichen. Mit Steck-Dreh-Verbindungen kann außerdem die Anwendbarkeit des Filterverschlusssystems auf engstem Raum realisiert werden.

Erfindungsgemäß weist der Deckel ein S-förmiges Profil auf, wobei die Schenkel des Profils den Dichtungsbereich und Haltebereich am Anschlussende des Filtergehäuses wenigstens mit bilden. Dies verbessert den Halt des Anschlussgegenstücks in Aufnahmeraum und wirkt Verformungen im Bereich des Filterverschlusssystems infolge von Temperatur- und/oder Druckveränderungen entgegen. Die Anlagefläche verbessert ferner die Führung für das Anschlussgegenstück beim Einstecken.

In einer Ausführungsform weist der äußere Schenkel des S- förmig profilierten Deckels axial von dem Filtergehäuse weg und ist mit dem Filtergehäuse insbesondere mittels einer Bördelverbindung oder/und der einer anderen Fügetechnik wie einer Klebeverbindung verbunden.

In einer Ausführungsform weist der radial innere Schenkel des S-förmig profilierten Deckels axial in Richtung des Filtergehäuseinneren.

In einer Ausführungsform weist der innere Schenkel des U-förmig profilierten Deckels axial vom Filtergehäuseinneren weg.

In einer Ausführungsform ist der Haltebereich des Deckels radial innen am inneren Schenkel des S- oder U-förmig profilierten Deckels, insbesondere in Form eines Innengewindes, angeordnet.

In einer Ausführungsform bildet der beim Bördeln nach radial innen um den äußeren Schenkel des Deckels umgeschlagene Teil des Filtergehäuses, insbesondere des Filtertopfes, eine radiale Dichtfläche, insbesondere zum Eingriff einer sockelseitigen Radialdichtung, insbesondere zur Abdichtung gegenüber der Umgebung.

In einer Ausführungsform bildet der Deckel zwischen dem inneren und dem äußeren Schenkel einen geschlossenen Kreisring, der neben der zentralen, durch den Haltebereich gebildeten Öffnung keine weiteren Öffnungen aufweist. Dabei wird bevorzugt durch die zentrale Öffnung bzw. den Haltebereich die Einströmöffnung des Filters gebildet.

In einer Ausführungsform wird der reinseitige Auslass durch einen durch die zentrale Öffnung des Deckels hindurchgreifenden, insbesondere sockelseitigen Anschlussstutzen gebildet. Der Anschlussstutzen greift dabei in eine Auslassöffnung des Elementdeckels (auch Endscheibe genannt) des Filtereinsatzes ein, wobei die Abdichtung zwischen Roh- und Reinseite durch eine an der Endscheibe des Filtereinsatzes angebrachten Radialdichtung erfolgt, welche mit dem Anschlussstutzen in Eingriff steht.

In einer Ausführungsform ist der Innendurchmesser des inneren Schenkels mindestens doppelt so groß wie der Innendurchmesser der Auslassöffnung des Elementdeckels oder der Innendurchmesser deren Radialdichtung. Dies hat den Vorteil, dass ein für einen möglichst geringen Druckverlust ausreichend große, ringförmiges Einlassquerschnitt gebildet wird.

In einer Ausführungsform ist der Innendurchmesser des inneren Schenkels mindestens halb so groß wie der Außendurchmesser des äußeren Schenkels, bevorzugt größer als 60% des Außendurchmessers. Hierdurch kann die Verformung unter Druckbelastung reduziert werden.

In einer Ausführungsform weist der Filter deckelseitig ein Anschlussende für den Anschluss an einem Anschlussflansch auf

In einer Ausführungsform weist der Anschlussflansch mehrere insbesondere kreisförmig angeordnete Einlassöffnungen für den Einlass von zu filternder Flüssigkeit in den Filter auf. Dabei ist bevorzugt zentral und konzentrisch dazu ein Auslass, insbesondere in Form eines hervorstehenden Anschlussstutzens, am dem Anschlussflansch angeordnet

Erfindungsgemäß weist der Anschlussflansch auf seiner dem Filtergehäuse zugewandten Seite einen radial inneren Haltezylinder und einen radial äußeren Dichtungszylinder auf, welche sich axial zu einer Steckrichtung des Filtergehäuses erstrecken. Der Haltezylinder und der Dichtungszylinder umgeben dabei die Einlassöffnungen. Der Haltezylinder weist bevorzugt an seiner radial äußeren Umfangsseite ein Außengewinde zur Verbindung mit einem filterseitigen Innengewinde, insbesondere am Deckel, auf. In der radial äußeren Umfangsseite des Dichtungszylinders, welche eine Flanschdichtungsfläche bildet, ist weiter bevorzugt eine Dichtungsnut mit einer radial wirkenden Ringdichtung angeordnet.

In einer Ausführungsform umfasst der Filter im Filtergehäuse einen Filtereinsatz bzw. ein Filterelement Der Filtereinsatz umfasst einen dem Anschlussflansch zugewandten Elementdeckel, einen einem Boden des Filtergehäuses zugewandten Elementboden und ein skelettartiges Mittelrohr, welches sich zwischen dem Elementdeckel und dem Elementboden erstreckt Das Mittelrohr ist dabei von einem Filtermedium in Form eines Filterbalges aus zickzackförmig gefaltetem Filtermedium umgeben. Das Mittelrohr begrenzt einen Innenraum des Filtermediums.

In einer Ausführungsform weist der Elementdeckel eine zum Mittelrohr konzentrische Auslassöffnung auf. Die Auslassöffnung ist auf der dem Anschlussende zugewandten Seite mit einem hohlzylindrischen Verbindungsstutzen umgeben. In dem Verbindungsstutzen steckt ein Anschlussstutzen des Anschlussflansches, der den Auslass mit bildet, Bevorzugt weist der Verbindungsstutzen eine radiale Dichtung zur Abdichtung gegenüber dem Anschlussstutzen auf.

In einer Ausführungsform ist der Elementdeckel des Filtereinsatzes und damit auch der Filtereinsatz auf der Seite des Anschlussendes mit einem Ringraumdeckel im Filtergehäuse fixiert, wobei der Ringraumdeckel bevorzugt gleichzeitig den Gehäusedeckel bildet. Der Elementdeckel weist bevorzugt axial verlaufende Stützen auf, zwischen denen Verbindungskanäle zwischen dem Anschlussringraum, der rohseitig zwischen Elementdeckel und Gehäusedeckel gebildet ist, und dem Einlassringraum, der das Filterelement rohseitig und radial außen umgibt, realisiert werden.

In einer Ausführungsform begrenzen auf der dem Filtermedium abgewandten Seite des Elementdeckels der Ringraumdeckel, der Verbindungsstutzen des Elementdeckels und der Elementdeckel den Anschlussringraum.

In einer Ausführungsform weist der Ringraumdeckel eine zur Auslassöffnung des Elementdeckels konzentrische Durchführöffnung für den Haltezylinder des Anschlussflansches auf. Der Durchmesser der Durchführöffnung ist dabei deutlich größer als der Durchmesser der Auslassöffnung, so dass das für den Ringraumdeckel benötigte Material verhältnismäßig gering ist. Auf diese Weise ist auch die Angriffsfläche bei Druckerhöhung im Inneren des Filtergehäuses entsprechend gering und eine mögliche Verbiegung des Ringraumdeckels nahezu ausgeschlossen. Vorteilhafterweise kann der Anschlusskörper ein Anschlusskopf oder ein Anschlussflansch insbesondere einer Brennkraftmaschine sein.

Die Aufgabe wird ferner mit einer Brennkraftmaschine dadurch gelöst, dass sie einen Anschlusskopf mit einem Dichtungsbereich und einem Haltebereich für den Dichtungsbereich und den Haltebereich eines erfindungsgemäßen Filters aufweist.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: schematisch eine isometrische Längsschnitt-Darstellung eines Wechselfilters mit einem ersten Ausführungsbeispiel eines Filtergehäuses, in dem ein Filtereinsatz angeordnet ist und das mit einem Anschlussflansch dicht verbunden ist;
- Figur 2: schematisch einen Ausschnitt des Filtergehäuses aus Figur 1 ohne Anschlussflansch;
- Figur 3: schematisch der Anschlussflansch aus der Figur 1 im Längsschnitt;
- Figur 4: schematisch eine isometrische Halbschnitt-Darstellung eines zweiten Ausführungsbeispiels eines Filtergehäuses eines Wechselfilters, welches zu dem Filtergehäuse aus den Figuren 1 und 2 ähnlich ist;
- Figur 5: schematisch eine isometrische Halbschnitt-Darstellung eines dritten Ausführungsbeispiels eines Filtergehäuses eines Wechselfilters, welches zu den Filtergehäusen aus den Figuren 1, 2 und 4 ähnlich ist.

In den Figuren sind gleiche Bauteile mit gleichen Bezugszeichen versehen.

### Ausführungsform(en) der Erfindung

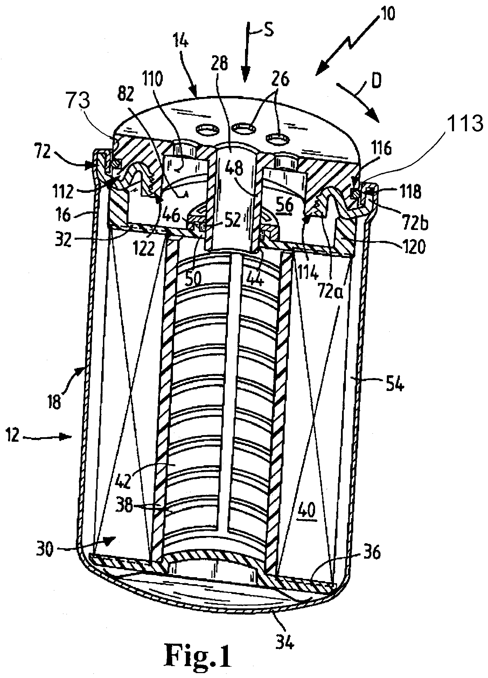

In der Figur 1 ist ein Flüssigkeitsfiltersystem 10 mit einem Wechselfilter 12 und einem Anschlussflansch 14 gezeigt. Dabei ist ein stirnseitiges kreiszylindrisches Anschlussende 16 eines topf- oder becherförmigen Filtergehäuses 18 des Wechselfilters 12 mit dem Anschlussflansch 14 dicht verbunden. Das Anschlussende 16 umgreift den Anschlussflansch 14. Der Anschlussflansch 14 kann hierbei ein separater Anschlussflansch 14 sein oder auch als Anschlusskopf direkt aus einer Komponente einer Brennkraftmaschine gebildet sein. Das Flüssigkeitsfiltersystem 10 kann verwendet werden für Flüssigkeiten jedweder Art einer Brennkraftmaschine, wie beispielsweise Öl, Kraftstoffe, Hydraulikflüssigkeiten oder auch Kühlmittel.

Im Anschlussflansch 14 sind eine Mehrzahl von Einlassöffnungen 26 für zu filternde Flüssigkeit und ein Auslass 28 für gefilterte Flüssigkeit angeordnet.

Der Auslass 28 ist dabei konzentrisch im Zentrum des Anschlussflanschs 14 angeordnet. Die Einlassöffnungen 26 sind entlang eines konzentrischen Kreises um den Auslass 28 verteilt angeordnet.

Ferner weist der Anschlussflansch 14 auf seiner dem Filtergehäuse 18 zugewandten Seite einen radial inneren Haltezylinder 110 und einen radial äußeren Dichtungszylinder 112 auf, welche sich axial zu einer ein Steckrichtung S des Filtergehäuses 18 erstrecken. Der Haltezylinder 110 und der Dichtungszylinder 112 umgeben die Einlassöffnungen 26. Der Haltezylinder 110 weist an seiner radial äußeren Umfangsseite ein Außengewinde 114 auf. In der radial äußeren Umfangsseite des Dichtungszylinders 112, welche eine Flanschdichtungsfläche 113 bildet, ist eine Dichtungsnut 116 mit einer radial wirkenden Ringdichtung 118 angeordnet.

Im Filtergehäuse 18 ist ein Filtereinsatz 30 untergebracht. Der Filtereinsatz 30 umfasst einen dem Anschlussflansch 14 zugewandten Elementdeckel 32, einen einem Boden 34 des Filtergehäuses 18 zugewandten Elementboden 36 und ein skelettartiges Mittelrohr 38, welches sich zwischen dem Elementdeckel 32 und dem Elementboden 36 erstreckt. Das Mittelrohr 38 ist von einem Filtermedium 40 in Form eines Filterbalges aus zickzackförmig gefaltetem Vlies umgeben. Das Mittelrohr 38 begrenzt einen Innenraum 42 des Filtermediums 40.

Der Elementdeckel 32 weist eine zum Mittelrohr 38 konzentrische Auslassöffnung 44 auf. Die Auslassöffnung 44 ist auf der dem Anschlussende 16 zugewandten Seite mit einem hohlzylindrischen Verbindungsstutzen 46 umgeben. In dem Verbindungsstutzen 46 steckt ein Anschlussstutzen 48 des Anschlussflansches 14, der den Auslass 28 mit bildet. Auf seiner radial inneren Umfangsseite weist der Verbindungsstutzen 46 eine sich radial nach innen erstreckende Dichtringstufe 50 auf. An der Dichtringstufe 50 liegt eine O-Ringdichtung 52 an, welche sich zwischen dem Innenmantel des Verbindungsstutzens 46 und dem Außenmantel des Anschlussstutzens 48 befindet.

Das Filtermedium 40 ist von einem Einlassringraum 54 umgeben, welcher über einen weiter unten näher erläuterten Anschlussringraum 56 mit den Einlassöffnungen 26 des Anschlussflansches 14 in Verbindung steht. Das Filtermedium 40 kann von der zu filternden Flüssigkeit radial von außen nach innen vom Einlassringraum 54 zum Innenraum 42 durchströmt werden.

Der Elementdeckel 32 des Filtereinsatzes 30 und damit auch der Filtereinsatz 30 sind auf der Seite des Anschlussendes 16 mit einem Ringraumdeckel 72 im Filtergehäuse 18 fixiert. Der Elementdeckel 32 weist axial verlaufende Stützen 120 auf, zwischen denen Verbindungskanäle zwischen dem Anschlussringraum 56 und dem Eintassringraum 54 realisiert werden. Der Ringraumdeckel 72 ist innerhalb des Anschlussendes 16 koaxial zu diesem angeordnet.

Auf der dem Filtermedium 40 abgewandten Seite des Elementdeckels 32 begrenzen der Ringraumdeckel 72, der Verbindungsstutzen 46 des Elementdeckels 32 und der Elementdeckel 32 den Anschlussringraum 56.

Der Ringraumdeckel 72 weist eine zur Auslassöffnung 44 des Elementdeckels 32 konzentrische Durchführöffnung 82 für den Haltezylinder 110 des Anschlussflansches 14 auf. Der Durchmesser der Durchführöffnung 82 ist deutlich größer als der Durchmesser der Auslassöffnung 44, so dass das für den Ringraumdeckel 72 benötigte Material verhältnismäßig gering ist. Auf diese Weise ist auch die Angriffsfläche bei Druckerhöhung im Inneren des Filtergehäuses 18 entsprechend gering und eine mögliche Verbiegung des Ringraumdeckels 72 nahezu ausgeschlossen.

Der Ringraumdeckel 72 weist ein S-förmiges Profil auf. Das freie Ende des radial inneren Schenkels 72a zeigt zum Inneren des Filtergehäuses 18. Das freie Ende des radial äußeren Schenkels 72b zeigt vom Inneren des Filtergehäuses 18 weg. Der radial innere Schenkel 72a des Profils bildet einen Halteabschnitt am Anschlussende 16 des Filtergehäuses 18. Er weist an seiner radial inneren Fläche ein Innengewinde 122 auf, welches zu dem Außengewinde 114 des Haltezylinders 110 des Anschlussflansches passt. Der radial äußere Schenkel 72b ist über eine Bördelverbindung mit dem Rand des Filtergehäuses 18 fest verbunden und bildet mit dem umgebördelten Rand des Filtergehäuses 18 einen Dichtungsabschnitt, wobei die radial innere Fläche des umgebördelten Randes des Filtergehäuses 18 eine Dichtungsfläche 73 bildet, an der sich die Ringdichtung 118 am Dichtungszylinder 112 des Anschlussflansches 14 radial abstützt. Der Halteabschnitt und der Dichtungsabschnitt sind gebildet bzw, mitgebildet durch die Schenkel 72a und 72b und verlaufen also konzentrisch im Wesentlichen axial zur Steckrichtung S.

Das Anschlussende 16 des Filtergehäuses 18 ist in der axialen Steckrichtung S auf das Anschiussgegenstück 20 des Anschlussflansches 14 aufsetzbar und kann durch eine Steck-Dreh-Bewegung mit dem Anschlussgegenstück 20 verschraubt werden.

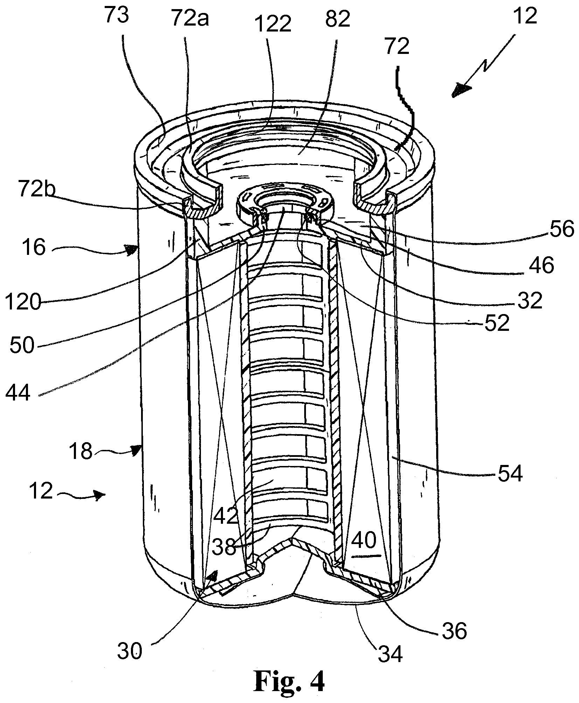

Bei einem zweiten Ausführungsbeispiel, dargestellt in der Figur 4, sind diejenigen Elemente, die zu denen des ersten, in den Figuren 1 bis 3 beschriebenen Ausführungsbeispiels ähnlich sind, mit denselben Bezugszeichen versehen, so dass bezüglich deren Beschreibung auf die Ausführungen zum ersten Ausführungsbeispiel Bezug genommen wird. Dieses Ausführungsbeispiel unterscheidet sich von ersten dadurch, dass der Ringraumdeckel 72 statt eines S-förmigen Profils ein einfach herstellbares U-förmiges Profil aufweist. Das freie Ende des radial inneren Schenkels 72a, welcher den Halteabschnitt bildet, zeigt vom Inneren des Filtergehäuses 18 weg.

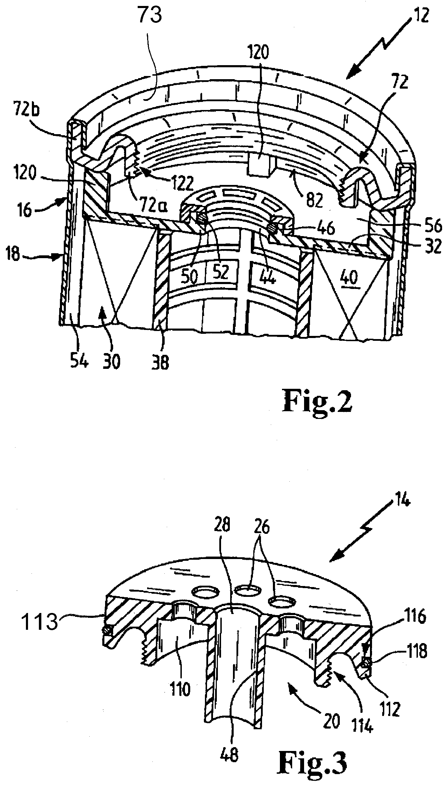

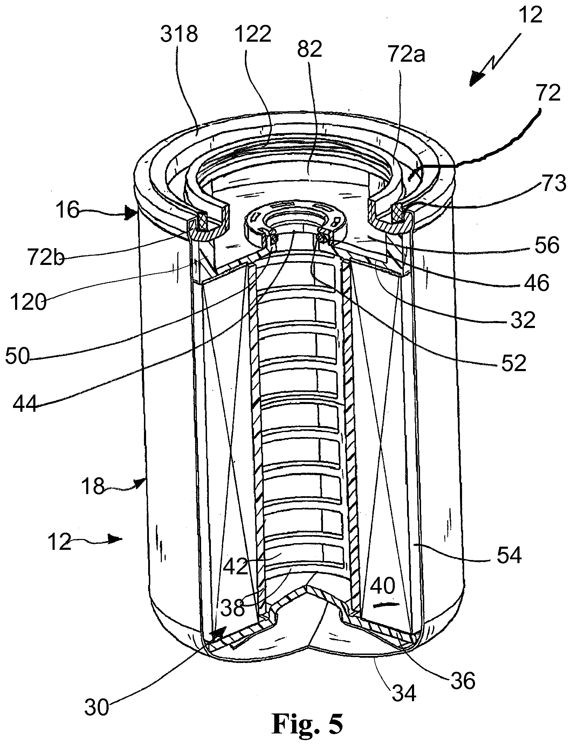

Bei einem dritten Ausführungsbeispiel, dargestellt in der Figur 5, sind diejenigen Elemente, die zu denen des zweiten, in der Figur 4 beschriebenen Ausführungsbeispiels ähnlich sind, mit denselben Bezugszeichen versehen, so dass bezüglich deren Beschreibung auf die Ausführungen zum zweiten beziehungsweise zum ersten Ausführungsbeispiel Bezug genommen wird. Dieses Ausführungsbeispiel unterscheidet sich von zweiten und vom ersten dadurch, dass eine Ringdichtung 318 zwischen dem radial äußeren Schenkel 72b und dem radial inneren Schenkels 72a des Ringraumdeckels 72 angeordnet ist und mit ihrer radial äußeren Seite an der Dichtungsfläche 73 des umgebördelten Randes des Filtergehäuses 18 anliegt. Die Ringdichtung 318 ersetzt die Ringdichtung 118 in der Dichtungsnut 116 des Anschlussflanschs 14 aus Figur 3. Bei einem nicht gezeigten, zu dem Anschlussflansch 14 ähnlichen, montierten Anschlussflansch ohne Ringdichtung 118 und Dichtungsnut 116, liegt die radial innere Seite der Ringdichtung 318 an der entsprechend durchgängigen Flanschdichtungsfläche 113 an. Die Ringdichtung 318 wirkt so in radialer Richtung. Außerdem stützt sich die Ringdichtung 318 mit einer Stirnseite an dem sich radial erstreckenden Boden des Ringraumdeckels 72 ab und überragt in axialer Richtung den Rand des Filtergehäuses 18. Die den Rand des Filtergehäuses 18 überragende Stirnseite der Ringdichtung 318 kann so zusätzlich in axialer Richtung gegen eine radiale Dichtungsfläche einer optionalen Dichtungsstufe des Anschlussflanschs abdichten.

Bei den oben beschriebenen Ausführungsbeispielen eines Flüssigkeitsfiltersystems 10 sind unter anderem folgende Modifikationen möglich:

Die Erfindung ist nicht beschränkt auf Flüssigkeitsfiltersysteme 10 für Brennkraftmaschinen. Sie kann auch bei andersartigen Filtersystemen, beispielsweise auch für gasförmige Fluide, insbesondere Druckluft, eingesetzt werden. Derartige Filtersysteme finden im Allgemeinen in der Kraftfahrzeugtechnologie oder auch bei Industriemotoren Verwendung.

Anstelle des als Filterbalg aus zickzackförmig gefaltetem Vlies aufgebauten Filtermediums 40 kann auch ein andersartiges Filtermedium verwendet werden.

Anstelle der Schraubverbindung kann auch eine andersartige lösbare Schnellverbindung, insbesondere Steck-Dreh-Verbindung oder eine Bajonettverbindung oder eine Rastverbindung oder eine andersartige Steck- und/oder Drehverbindung, vorgesehen sein. Bei Verwendung einer reinen Steckverbindung können das Anschlussende, dass Anschlussgegenstück, der Verbindungsstutzen und Anschlussstutzen beispielsweise auch oval oder eckig sein.

Statt des Anschlussflansches 14 kann auch ein andersartiges Anschluss- und/oder Verschlussteil, beispielsweise ein Anschlusskopf eines Kraftfahrzeugs, insbesondere einer Brennkraftmaschine, oder eines Industriemotors oder auch nur ein einfacher Verschlussdeckel, verwendet werden.

## Patentansprüche

1. Flüssigkeitsfiltersystem mit einem Anschlusskörper (14) und mit einem Filter (10), insbesondere Wechselfilter, insbesondere für Kraftfahrzeuge, Industriemotoren, insbesondere Ölfilter, Kraftstofffilter oder Kühlmittelfilter, wobei der Filter (10) mit einem Filtergehäuse (18) versehen ist, in dem ein Filterelement (30) untergebracht ist und wobei das Filter (10) ein stirnseitiges Anschlussende (16) mit einem Deckel (72) aufweist, das derart ausgebildet ist, dass es mit dem mit dem Anschlussende (16) korrespondierenden Anschlusskörper (14) durch eine Steck- und/oder Drehbewegung (S, D) dicht verbindbar ist, wobei der Deckel (72) eine Öffnung (82) für eine Fluidverbindung zwischen dem Anschlusskörper (14) und dem Filtergehäuse (18) aufweist, wobei am Anschlussende (16) des Filtergehäuses (18) ein Dichtungsbereich (72b) und ein Haltebereich (72a) angeordnet sind, die derart ausgebildet sind, dass sie konzentrisch im Wesentlichen axial zur Steckrichtung (S) verlaufen und radial nach innen gewandt sind, und die mit einem jeweiligen radial nach außen gewandten im Wesentlichen axial verlaufenden Dichtungsbereich (112) und einem Haltebereich (110) des Anschlusskörpers (14) zusammenwirken können, wobei der Deckel (72) ein S-förmiges Profil aufweist, wobei die Schenkel (72a, 72b) des Profils den Dichtungsbereich (72b) und Haltebereich (72a) am Anschlussende (16) des Filtergehäuses (18) wenigstens mit bilden, und wobei der als Anschlussflansch ausgebildete Anschlusskörper (14) auf seiner dem Filtergehäuse (18) zugewandten Seite einen radial inneren Haltezylinder (110) und einen radial äußeren Dichtungszylinder (112) aufweist, welche sich axial zu einer Steckrichtung (S) des Filtergehäuses (18) erstrecken,

2. Flüssigkeitsfiltersystem nach Anspruch 1, **dadurch gekennzeichnet, dass** der Haltebereich (72a) am Anschlussende (16) radial innen ist und Verbindungselemente (122) einer lösbaren Schnellverbindung, insbesondere einer Steck-Dreh-Verbindung, vorzugsweise einer Schraubverbindung oder einer Bajonettverbindung oder einer Rastverbindung, aufweist, die mit entsprechenden Verbindungselementen (114) des radial inneren Haltebereichs (110) des Anschlusskörpers (14) zusammenwirken können und der radial äußere Dichtungsbereich (72b) am Anschlussende (16) Dichtungselemente, insbesondere mit einer Dichtungsfläche (73), mit bildet, die mit entsprechenden Dichtungselementen, insbesondere mit einer Dichtungsfläche (113), des radial äußeren Dichtungsbereichs (112) des Anschlusskörpers (14) in radialer Richtung dichtend zusammenwirken können.

3. Flüssigkeitsfiltersystem nach einem der vorigen Ansprüche, **dadurch gekennzeichnet, dass** der Anschlusskörper (14) ein Anschlusskopf oder ein Anschlussflansch insbesondere einer Brennkraftmaschine ist.

## Claims

1. Liquid filter system with a connecting body (14) and with a filter (10), in particular spin-on filter, in particular for motor vehicles, industrial engines, in particular oil filters, fuel filter or coolant filters, wherein the filter (10) is provided with a filter housing (18) in which a filter element (30) is accommodated and wherein the filter (10) features a frontal connecting end (16) with a cover (72) which is designed in such a way that it is sealingly connectable by means of a plug-in and/or rotational movement (S, D) with the connecting body (14) corresponding with the connecting end (16), wherein the cover (72) features an opening (82) for a fluid connection between the connecting body (14) and the filter housing (18), wherein at the connecting end (16) of the filter housing (18) are disposed a sealing area (72b) and a holding area (72a) which are designed in such a way that they extend concentrically substantially axially to the plug-in direction (S) and face radially inwards and which can interact with a respective radially outwardly facing, substantially axially extending sealing area (112) and a holding area (110) of the connecting body (14), wherein the cover (72) features an S-shaped profile, wherein the legs (72a, 72b) of the profile at least form also the sealing area (72b) and holding area (72a) at the connecting end (16) of the filter housing (18), and wherein the connecting body (14) designed as connecting flange features on its side facing the filter housing (18) a radially inner holding cylinder (110) and a radially outer sealing cylinder (112) which extend axially to a plug-in direction (S) of the filter housing (18).

2. Liquid filter system according to claim 1, **characterized in that** the holding area (72a) at the connecting end (16) is radially inside and features connecting elements (122) of a releasable quick coupling, in particular of a plug-rotary-connection, preferably of a screwed connection or a bayonet connection or a snap-in connection which can interact with corresponding connecting elements (114) of the radially inner holding area (110) of the connecting body (14) and the radially outer sealing area (72b) at the connecting end (16) forms sealing elements, in particular with a sealing surface (73), which can sealingly interact with corresponding sealing elements, in particular with a sealing surface (113), of the radially outer sealing area (112) of the connecting body (14) in radial direction.

3. Liquid filter system according to one of the above claims, **characterized in that** the connecting body (14) is a connecting head or a connecting flange in particular of an internal combustion engine.

## Revendications

1. Système de filtration pour liquides comportant un corps de raccordement (14) et un filtre (10), en particulier un filtre interchangeable, en particulier pour véhicules automobiles, moteurs industriels, en particulier filtres à huile, filtres à carburant ou filtres à fluide de refroidissement, le filtre (10) étant pourvu d'un boîtier de filtre (18) dans lequel est logé un élément filtrant (30) et le filtre (10) présentant une extrémité de raccordement (16) avec un couvercle (72), qui est conçu de telle sorte qu'il peut être relié de manière étanche au corps de raccordement (14) correspondant à l'extrémité de raccordement (16) par un mouvement enfichable et/ou rotatif (S, D), le couvercle (72) présentant une ouverture (82) pour une connexion de fluide entre le corps de raccordement (14) et le boîtier de filtre (18), une zone d'étanchéité (72b) et une zone de retenue (72a) étant disposées à l'extrémité de raccordement (16) du boîtier de filtre (18), qui sont conçues de telle sorte qu'elles s'étendent concentriquement sensiblement axialement par rapport au sens d'enfichage (S) et sont tournées radialement vers l'intérieur et qui peuvent coopérer avec une zone d'étanchéité respective (112) qui s'étend sensiblement axialement radialement vers l'extérieur et une zone de maintien (110) du corps de raccordement (14), le couvercle (72) présentant un profil en S, les branches (72a, 72b) du profilé formant au moins également la zone d'étanchéité (72b) et la zone de maintien (72a) à l'extrémité de raccordement (16) du boîtier de filtre (18), et le corps de raccordement (14) réalisé comme bride de raccordement présentant sur son côté orienté vers le boîtier de filtre (18) un cylindre de maintien (110) radialement intérieur et un cylindre d'étanchéité (112) radialement extérieur qui s'étendent axialement par rapport à un sens d'enfichage (S) du boîtier de filtre (18).

2. Système de filtration pour liquides selon la revendication 1, **caractérisé en ce que** la zone de maintien (72a) à l'extrémité de raccordement (16) se trouve radialement à l'intérieur et présente des éléments de raccordement (122) d'un raccord rapide amovible, en particulier d'un raccordement enfichable et tournant, de préférence d'un raccord vissé ou d'un raccord à baïonnette ou d'un raccord encliquetable qui peuvent coopérer avec des éléments de raccordement (114) de la zone de maintien radialement intérieure (110) du corps de raccordement (14) et la zone d'étanchéité radialement extérieure (72b) forme également à l'extrémité de raccordement (16) des éléments d'étanchéité, en particulier avec une surface d'étanchéité (73), qui peuvent interagir de manière étanche dans une direction radiale avec des éléments d'étanchéité respectifs, en particulier avec une surface d'étanchéité (113), de la zone d'étanchéité radialement extérieure (112) du corps de raccordement (14).

3. Système de filtration pour liquides selon l'une des revendications précédentes, **caractérisé en ce que** le corps de raccordement (14) est une tête de raccordement ou une bride de raccordement en particulier d'un moteur à combustion interne.
